# EUROPEAN PATENT SPECIFICATION

(11) **EP 4 253 163 B1**
(45) Date of publication and mention of the grant of the patent: **01.10.2025**
(21) Application number: 23164966.6
(22) Date of filing: 29.03.2023
(51) Int. Cl.: B60R 21/231

(54) **A FOOT WELL PANEL FOR AN INTERIOR TRIM PART OF A VEHICLE**
SCHACHTBODENPLATTE FÜR EIN INNENVERKLEIDUNGSTEIL EINES FAHRZEUGS
PANNEAU DE FOND DE PUITS POUR UNE PARTIE DE GARNITURE INTÉRIEURE D'UN VÉHICULE

(30) Priority: 30.03.2022 IN 202221018779
(43) Date of publication of application: 04.10.2023
(73) Proprietor: Faurecia India Private Limited, Bhosari, Pune 411026 (IN)
(72) Inventor: DALAVI, Sandeep, 412105 PUNE (IN); DUBHASHI, Vinit, 411018 PUNE (IN)
(74) Representative: Lavoix

(56) References cited:
- EP-B1- 1 183 168
- DE-A1- 102017 218 740
- US-B2- 10 682 973

## Description

### Field of the Invention

The present disclosure relates to the field of an interior trim panel of a vehicle. More particularly, the present disclosure relates to a foot well panel mountable on an interior trim part like an instrument panel of the vehicle interior.

### Background of the Invention

Generally, in automotive a foot well panel is arranged on a frontal region of the instrument panel especially clipped on a bottom portion of the instrument panel.

In case of crash the footwell panel tends to unclipping & may fly off into the vehicle interior which is highly non-desirable.

Therefore, there is a requirement of a footwell panel arranged on the instrument panel which may partially or completely overcome the problems of the prior arts. Document DE 10 2017 218740 A1 discloses an example of a footwell panel.

### Objects of the Invention

It is an object of the present disclosure to provide a foot well panel for a vehicle interior which will not break/tear and will not fall instead the foot well panel bends thereby absorbing some energy and reduce forces on fixation/mounting location of the footwell with instrument panel.

Yet another object of the present invention is to provide a foot well panel for a vehicle interior which can be moulded only with single nozzle and the foot well panel is producible with warpage under the limit.

One more object of the present invention is to provide a foot well panel for a vehicle interior which is cost effective and simple in construction.

### Summary of the invention

The invention relates to a foot well panel as described in claim 1. In an aspect the present disclosure relates to a foot well panel for a vehicle. The footwell panel may be arranged on an interior trim part of the vehicle. The foot well panel may be a flat sheet shaped member mountable to the interior trim part. The interior trim part can be an instrument panel of the vehicle, wherein the footwell panel is mounted to the interior trim part in a plane essentially parallel to the floor of the vehicle or extending substantially horizontally in a vehicle interior space. The foot well panel may be fastened with the interior trim part and can be detachable from the interior trim part.

The footwell panel includes one or more weakening section configured/formed on/in a portion and along the plane of the foot well panel for example by injection molding or laser application. The one or more weakening section facilitate initiation of bending of the footwell panel upon an impact being applied on the vehicle. The foot well panel also includes one or more slot which are configured intermediately between and / or along the length of the one or more weakening section. The one or more weakening section and the one or more slot together enables the footwell panel to collapse upon an impact being applied on the vehicle preferably on a frontal region of the vehicle thereby preventing the detachment of the foot well panel from the interior trim part.

The footwell panel includes a fastening assembly selected from a group of a clipping, hooking, screwing, snap-fit, welding or a combination thereof for mounting the foot well panel to the interior trim part. The foot well panel may be attached by using screws or rivets or can be snap fitted across the interior trim part.

In the present embodiment, the footwell panel includes two weakening sections arranged on the plane of the foot well panel. More particular, the one or more weakening section include a first weakening section and a second weakening section. The first weakening section is configured in a lengthwise orientation along the foot well panel. The first weakening section and/or the second weakening section is a weakening line configured/formed on/in a portion of the footwell panel can be producible in an injection molding or by a laser application, which is/are thinner than the regular thickness of the foot well panel enabling bending of the footwell panel upon an impact being applied on the vehicle. In an embodiment, the one or more slot or orifice are configured along the weakening lines to provide a smoother bending or deformation ability of the footwell panel upon an impact being applied on the vehicle. The foot well panel also include a bucket shaped portion. The second weakening section may be configured/formed along a portion enclosing a circumference of the bucket shaped portion of the footwell panel of the vehicle.

Upon the impact being applied on the vehicle preferably on a frontal region of the vehicle, the foot well panel bends at the one or more weakening section by absorbing impact forces/energy and thereby reduce forces on fixation/mounting location around the fastening assembly of the footwell panel with the interior trim part for preventing the detachment of the foot well panel from the interior trim part. More particularly, when the vehicle collides in the frontal region, due to the impact, the first weakening section and/or the second weakening section bends along the weakening line thus, the footwell panel bends and do not detach or fly off from the interior trim part.

In another aspect, the present invention discloses an interior trim part for a vehicle. The interior trim part includes a foot well panel being mountable on/in the interior trim part of the vehicle in a plane essentially parallel to the floor of the vehicle or extending substantially horizontally in a vehicle interior space. Essentially means with a tolerance of (+/-) 5 to 10, degree variation. The foot well panel includes, one or more weakening section configured/formed on/in a portion and along a plane of the foot well panel such that the one or more weakening section facilitate initiation of bending of the footwell panel upon an impact being applied on the vehicle.

The foot well panel of the interior trim part further include one or more slot configured intermediately between and/or along the length of the one or more weakening section such that the one or more weakening section and the one or more slot together enables the footwell panel to bend and thus collapse upon an impact being applied on the vehicle thereby preventing the detachment of the foot well panel from the interior trim part.

More particularly, the one or more weakening section of the footwell panel of the interior trim part include a first weakening section and a second weakening section. Specifically, the interior trim part is an instrumental panel of the vehicle. The first weakening section is positioned in a lengthwise orientation along the foot well panel and the second weakening section is positioned along a portion enclosing a circumference of a bucket-shaped portion of the foot well panel of the vehicle.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
Figure 1 illustrates a foot well panel for a vehicle interior in accordance with the present invention;
Figure 2 illustrates the foot well panel configuration on the interior trim part;
Figure 3 illustrates a better view of a non-collapse condition of the foot well panel configuration on the interior trim part;
Figure 4 illustrates a collapse condition of the foot well panel upon an impact being applied on the vehicle; and
Figure 5 illustrates a crash rod for absorbing the imapct on the vehicle, arranged on a hook portion of the footwell panel.

### Detailed Description of the Invention

The following is a detailed description of embodiments of the disclosure depicted in the accompanying drawings. The disclosed embodiments are merely exemplary of the invention, which may be embodied in various forms. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

The present disclosure relates to a trim panel of a vehicle. Especially a foot well panel arranged on an interior trim part of the vehicle.

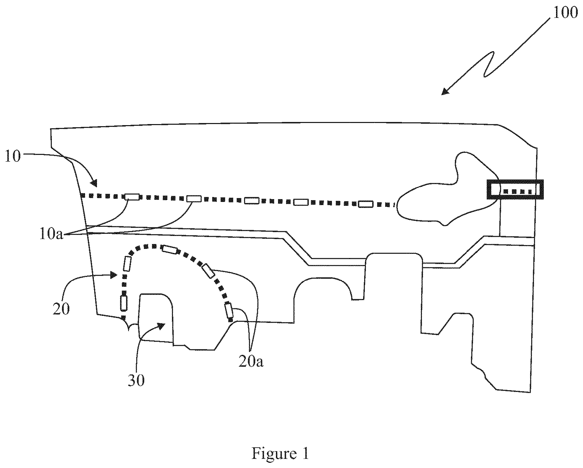

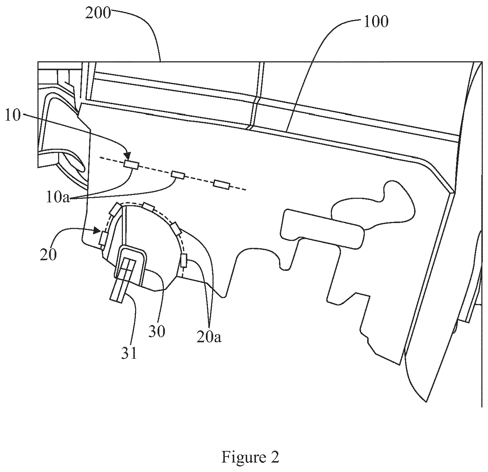

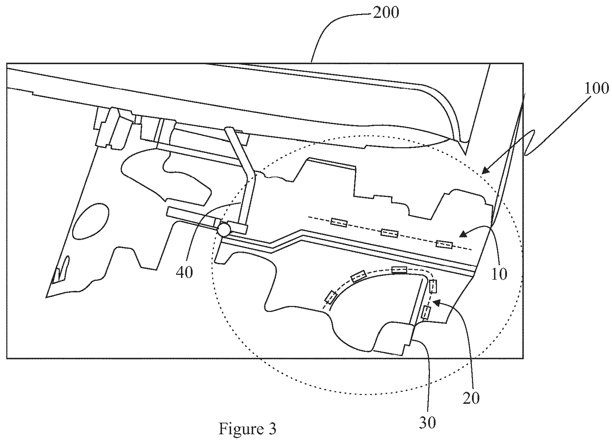

Referring now to figure 1-3, a foot well panel (100) for a vehicle in accordance with the present invention is illustrated. The footwell panel (100) is arranged in/on an interior trim part (200) of the vehicle as shown in figures 2 and 3. The foot well panel (100) is a flat sheet shaped member mountable to the interior trim part (200). The interior trim part (200) is an instrument panel of the vehicle. Specifically, the foot well panel is arranged at a bottom/lower side of the instrument panel More particularly, the footwell panel (100) is mounted to the interior trim part (200) in a plane essentially parallel to the floor of the vehicle. Specifically, the foot well panel is extending substantially horizontally in a vehicle interior space.

The footwell panel (100) includes one or more weakening section (10, 20) configured/formed on/in a portion and along the plane of the foot well panel (100). The one or more weakening section (10, 20) facilitate initiation of bending of the footwell panel (100) upon an impact being applied on the vehicle. The foot well panel (100) also includes one or more slot (10a, 20a) which are configured intermediately between and/or along the length of the one or more weakening section (10, 20). The one or more weakening section (10, 20) and the one or more slot (10a, 20a) together enables the footwell panel (100) to bend and thus collapse the foot well panel (100) upon an impact being applied on the vehicle preferably on a frontal region of the vehicle thereby preventing the detachment of the foot well panel (100) from the interior trim part (200).

The one or more weakening section (10, 20) refers to a portion of the footwell panel (100) which is thinner than the regular portion of the foot well panel (100), such that upon an impact, the one or more weakening section (10, 20) bends to prevent the detachment of the foot well panel (100) from the interior trim part (200). In the present embodiment, two weakening sections (10, 20) are arranged on a portion and along the plane of the foot well panel (100). The footwell panel (100) includes, a fastening assembly (not shown) selected from a group of a clipping, hooking, screwing, snap-fit, welding or a combination thereof for mounting the foot well panel (100) to the interior trim part (200). The foot well panel (100) may be attached by using screws or rivets or can be snap fitted across the interior trim part (200).

In the present embodiment as shown in figure 1, the one or more weakening section (10, 20) of the footwell panel (100) include a first weakening section (10) and a second weakening section (20). The first weakening section (10) is configured in a lengthwise orientation along the foot well panel (100). The first weakening section (10) is a weakening line configured/formed on a portion of the footwell panel (100) for example by an injection moulding or laser application which are thinner than the regular thickness of the foot well panel (100) enabling bending of the footwell panel (100) upon an impact being applied on the vehicle. In an embodiment, a one or more slot (10a) or orifices are configured along the weakening lines of the first weakening section (10) to provide a smoother bending or deformation ability. The one or more slot (10a) can be of any shape, like rectangular or circular or the like but not limited to it.

In implementation when the vehicle collides preferably in the frontal region, due to the impact of collision, the first weakening section (10) enables the footwell panel (100) to collapse (by bending at the weakening lines) thus preventing the footwell panel (100) from being detach from the interior trim part (200).

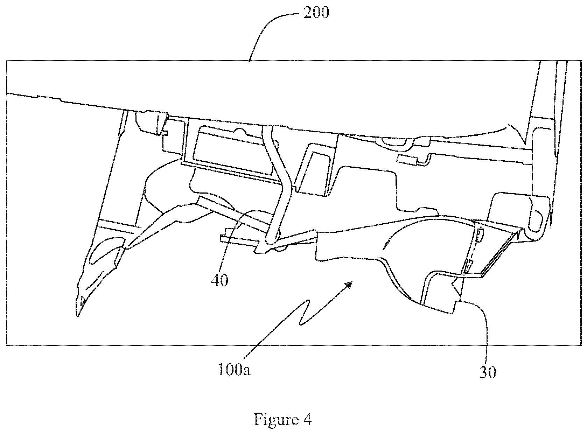

The foot well panel (100) also include a bucket shaped portion (30) as shown in figure 1 and 2. Specifically, the bucket shaped portion (30) is made for easy and correct fixation of the footwell with the interior trim part (200). Specifically, a free end portion of the bucket shaped portion (30) has a clip/hook element (31) arranged to connect the footwell panel to a BIW (body in white) of the interior trim part (200) at a desired location. The second weakening section (20) is configured/formed along a portion enclosing a circumference of the bucket shaped portion (30) of the footwell panel (100) of the vehicle as shown in figure 1 and 2. In implementation, upon an impact applied on the vehicle like when the vehicle collides preferably in the frontal region, due to the impact of collision, the second weakening section (20) bend along the weakening line of the second weakening section (20) and thus the footwell panel (100) collapse. More particularly upon impact, the foot well panel (100) bend at this weaking sections (10, 20) by absorbing impact force/ energy and reduce forces on fixation/mounting location around the fastening assembly of the footwell panel (100) with the interior trim part (200) thus prevent the flying from the panel (100) from the interior trim part (200) as shown in figure 4.

The footwell panel (100) with one or more weakening sections (10, 20) can be producible in an injection molding or by a laser application. The footwell panel (100) with one or more weakening section (10, 20) including one or more slot (10a, 20a) provides optimal stiffness with desired bending property in an event of impact being applied on the vehicle preferably in a frontal region of the vehicle.

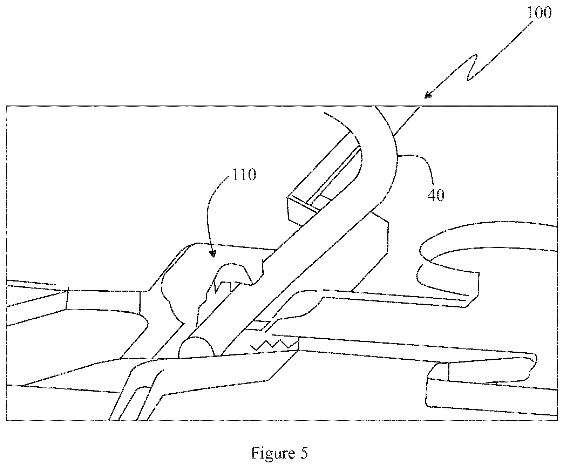

Further as shown in figure 3-5, the interior trim part (200) may include a crash rod (40) arranged on a hook portion (110) arranged on a plane of the footwell panel (100) for absorbing the forces/energy of an imapct being applied on the vehicle. Specifically, the crash rod (40) is an elongated rod may be copuled to or exdending from the interior trim part (200) and a free end portion of the crash rod (40) is clipped into the hook portion (110) of the foot well panel (100) as shown in figure 5.

Therefore, the present invention has an advantage of providing a foot well panel for a vehicle interior. The footwell panel can be moulded only with single nozzle & the foot well panel is producible with warpage under the limit. Also, the foot well panel will not fly off and will not fall instead the foot well panel bends at a weakening section by absorbing forces/energy of an impact being applied on the vehicle by reducing forces on fixation/mounting location of the footwell with interior trim part. Further, it is cost effective and simple in construction.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

## Claims

1. A foot well panel (100) for a vehicle, the foot well panel (100) being mountable on an interior trim part (200) of the vehicle, wherein the foot well panel (100) comprises:
one or more weakening section (10, 20) configured/formed on/in a portion and along a plane of the foot well panel (100), wherein the one or more weakening section (10, 20) facilitate initiation of bending of the footwell panel (100) upon an impact being applied on the vehicle,
wherein the one or more weakening section (10, 20) refers to a portion of the footwell panel (100) which is thinner than the regular portion of the foot well panel (100) such that upon an impact, the one or more weakening section (10, 20) bends to prevent the detachment of the foot well panel (100) from the interior trim part (200), , **characterized in that** the foot well panel (100) comprises:
a fastening assembly selected from a group of a clipping, hooking, screwing, snap-fit, welding or a combination thereof for mounting the foot well panel (100) to the interior trim part (200),
wherein upon the impact, the foot well panel (100) bends at the one or more weakening section (10, 20) by absorbing impact forces/energy and thereby reduce forces on a fixation/mounting location around the fastening assembly of the footwell panel (100) with the interior trim part (200) for preventing the detachment of the foot well panel (100) from the interior trim part (200).

2. The foot well panel (100) according to claim 1, wherein the foot well panel (100) further include one or more slot (10a, 20a) configured intermediately between and/or along the length of the one or more weakening section (10, 20), wherein the one or more weakening section (10, 20) and the one or more slot (10a, 20a) together enables the footwell panel (100) to bend upon an impact being applied on the vehicle thereby preventing the detachment of the foot well panel (100) from the interior trim part (200).

3. The foot well panel (100) according to claim 1 or 2, wherein the interior trim part (200) is an instrument panel of the vehicle, wherein the footwell panel (100) is mounted to the interior trim part (200) in a plane essentially parallel to the floor of the vehicle or extending substantially horizontally in a vehicle interior space.

4. The foot well panel (100) according to any one of the preceding claims, wherein the one or more weakening section (10, 20) is/are configured/formed by injection molding or by a laser application.

5. The foot well panel (100) according to any one of the preceding claims, wherein the one or more weakening section (10, 20) of the footwell panel (100) include a first weakening section (10) and a second weakening section (20), wherein the first weakening section (10) is configured in a lengthwise orientation along the foot well panel (100) and the second weakening section (20) is configured along a portion enclosing a circumference of a bucket shaped portion (30) of the footwell panel (100) of the vehicle.

## Patentansprüche

1. Fußraumtafel (100) für ein Fahrzeug, wobei die Fußraumtafel (100) an einem
Innenverkleidungsteil (200) des Fahrzeugs montierbar ist,
die Fußraumtafel (100) umfassend:
einen oder mehrere Schwächungsabschnitte (10, 20), die in einem Abschnitt und entlang einer Ebene der Fußraumtafel (100) ausgebildet sind, wobei der eine oder die mehreren Schwächungsabschnitte (10, 20) bei einem auf das Fahrzeug einwirkenden Aufprall ein Einleiten eines Biegens der Fußraumtafel (100) erleichtern, wobei der eine oder die mehreren Schwächungsabschnitte (10, 20) sich auf einen Abschnitt der Fußraumtafel (100) bezieht, der dünner ist als der reguläre Abschnitt der Fußraumtafel (100), sodass sich der eine oder die mehreren Schwächungsabschnitte (10, 20) bei einem Aufprall biegen, um die Ablösung der Fußraumtafel (100) von dem Innenverkleidungsteil (200) zu verhindern, **dadurch gekennzeichnet, dass** die Fußraumtafel (100) Folgendes umfasst:
eine Befestigungsanordnung, die ausgewählt aus der Gruppe von Klammern, Einhaken, Schrauben, Einrastverbindenn, Schweißen oder einer Kombination davon, zum Befestigen der Fußraumtafel (100) an dem Innenverkleidungsteil (200), wobei sich die Fußraumtafel (100) bei dem Aufprall an dem einen oder mehreren Schwächungsabschnitten (10, 20) durch Absorbieren von Aufprallkräften/-energie verbiegt und dadurch Kräfte an einer Befestigungs- /Montageposition um die Befestigungsanordnung der Fußraumtafel (100) mit dem Innenverkleidungsteil (200) herum reduziert, um die Ablösung der Fußraumtafel (100) von dem Innenverkleidungsteil (200) zu verhindern.

2. Fußraumtafel (100) nach Anspruch 1, wobei die Fußraumtafel (100) ferner einen oder mehrere Schlitze (10a, 20a) beinhaltet, die zwischen und/oder entlang der Länge des einen oder der mehreren Schwächungsabschnitte (10, 20) konfiguriert sind, wobei der eine oder die mehreren Schwächungsabschnitte (10, 20) und der eine oder die mehreren Schlitze (10a, 20a) zusammen die Fußraumtafel (100) in die Lage versetzen, sich bei einem auf das Fahrzeug einwirkenden Aufprall zu verbiegen, wodurch die Ablösung der Fußraumtafel (100) von dem Innenverkleidungsteil (200) verhindert wird.

3. Fußraumtafel (100) nach Anspruch 1 oder 2, wobei das Innenverkleidungsteil (200) eine Instrumententafel des Fahrzeugs ist, wobei die Fußraumtafel (100) an dem Innenverkleidungsteil (200) in einer Ebene montiert ist, die im Wesentlichen parallel zu dem Boden des Fahrzeugs ist oder sich im Wesentlichen horizontal in einem Fahrzeuginnenraum erstreckt.

4. Fußraumtafel (100) nach einem der vorherigen Ansprüche, wobei der eine oder die mehreren Schwächungsabschnitte (10, 20) durch Spritzgießen oder durch eine Laseranwendung ausgebildet sind.

5. Fußraumtafel (100) nach einem der vorherigen Ansprüche, wobei der eine oder die mehreren Schwächungsabschnitte (10, 20) der Fußraumtafel (100) einen ersten Schwächungsabschnitt (10) und einen zweiten Schwächungsabschnitt (20) beinhalten, wobei der erste Schwächungsabschnitt (10) in einer Längsausrichtung entlang der Fußraumtafel (100) konfiguriert ist und der zweite Schwächungsabschnitt (20) entlang eines Abschnitts konfiguriert ist, der einen Umfang eines becherförmigen Abschnitts (30) der Fußraumtafel (100) des Fahrzeugs umschließt.

## Revendications

1. Panneau (100) de compartiment des pieds pour un véhicule, le panneau (100) de compartiment des pieds pouvant être monté sur une
partie de garniture intérieure (200) du véhicule dans lequel
le panneau (100) de compartiment des pieds comprend :
une ou plusieurs sections d'affaiblissement (10, 20) formées sur/dans une partie et le long d'un plan du panneau (100) de compartiment des pieds, dans lequel les une ou plusieurs sections d'affaiblissement (10, 20) facilitent le début de la flexion du panneau (100) de compartiment des pieds lorsqu'un impact est appliqué sur le véhicule, dans lequel les une ou plusieurs sections d'affaiblissement (10, 20) se réfèrent à une partie du panneau (100) de compartiment des pieds qui est plus mince que la partie normale du panneau (100) de compartiment des pieds de sorte que lors d'impact, les une ou plusieurs sections d'affaiblissement (10, 20) se plient pour empêcher le détachement du panneau (100) de compartiment des pieds de la partie de garniture intérieure (200), **caractérisé en ce que** le panneau (100) de compartiment des pieds comprend :
un ensemble de fixation choisi dans un groupe de systèmes de clipsage, d'accrochage, de vissage, d'encliquetage, de soudage ou une combinaison de ceux-ci pour monter le panneau (100) de compartiment des pieds sur la partie de garniture intérieure (200), dans lequel, lors de l'impact, le panneau (100) de compartiment des pieds se plie au niveau des une ou plusieurs sections d'affaiblissement (10, 20) en absorbant les forces/l'énergie d'impact et en réduisant ainsi les forces sur un point de fixation/montage autour de l'ensemble de fixation du panneau (100) de compartiment des pieds à la partie de garniture intérieure (200) pour empêcher le détachement du panneau (100) de compartiment des pieds de la partie de garniture intérieure (200).

2. Panneau (100) de compartiment des pieds selon la revendication 1, dans lequel le panneau (100) de compartiment des pieds comprend en outre une ou plusieurs fentes (10a, 20a) configurées de manière intermédiaire entre et/ou le long de la longueur des une ou plusieurs sections d'affaiblissement (10, 20), dans lequel les une ou plusieurs sections d'affaiblissement (10, 20) et les une ou plusieurs fentes (10a, 20a) permettent ensemble au panneau (100) de compartiment des pieds de se plier lorsqu'un impact est appliqué sur le véhicule, empêchant ainsi le détachement du panneau (100) de compartiment des pieds de la partie de garniture intérieure (200).

3. Panneau (100) de compartiment des pieds selon la revendication 1 ou 2, dans lequel la partie de garniture intérieure (200) est un tableau de bord du véhicule, dans lequel le panneau (100) de compartiment des pieds est monté sur la partie de garniture intérieure (200) dans un plan sensiblement parallèle au plancher du véhicule ou s'étendant sensiblement horizontalement dans un espace intérieur du véhicule.

4. Panneau (100) de compartiment des pieds selon l'une quelconque des revendications précédentes, dans lequel les une ou plusieurs sections d'affaiblissement (10, 20) sont formées par moulage par injection ou par application laser.

5. Panneau (100) de compartiment des pieds selon l'une quelconque des revendications précédentes, dans lequel les une ou plusieurs sections d'affaiblissement (10, 20) du panneau (100) de compartiment des pieds comprennent une première section d'affaiblissement (10) et une seconde section d'affaiblissement (20), dans lequel la première section d'affaiblissement (10) est configurée dans une orientation longitudinale le long du panneau (100) de compartiment des pieds et la seconde section d'affaiblissement (20) est configurée le long d'une partie entourant une circonférence d'une partie en forme de baquet (30) du panneau (100) de compartiment des pieds du véhicule.
